# EUROPÄISCHE PATENTANMELDUNG

(11) **EP 4 700 515 A1**
(43) Veröffentlichungstag der Anmeldung: **25.02.2026**
(21) Anmeldenummer: 24195340.5
(22) Anmeldetag: 20.08.2024
(51) Int. Cl.: G05B 23/02, G06F 11/07

(54) **ÄQUIVALENZSUCHE IN VERLAUFSDIAGRAMMEN EINES LEITSYSTEMS FÜR EINE TECHNISCHE ANLAGE**

(71) Anmelder: Siemens Aktiengesellschaft, 80333 München (DE)
(72) Erfinder: Kluge, Georg, 76351 Linkenheim (DE); Lutz, Benjamin, 76327 Pfinztal (DE)
(74) Vertreter: Siemens Patent Attorneys

(57) **Zusammenfassung**

Die Erfindung betrifft ein Leitsystem (12) für eine technische Anlage, insbesondere Fertigungsanlage oder Prozessanlage, welches wenigstens einen Operator Station Server (13) und einen Operator Station Client (14) aufweist, wobei der Operator Station Server (13) dazu ausgebildet ist, Messwerte von einem mit dem Leitsystem (12) verbundenen technischen Objekt zu empfangen, zeitliche Verläufe (4, 8) der Messwertes zu erzeugen, die zeitlichen Verläufe (4, 8) der Messwerte in einem Speicher (16, 26) zu hinterlegen und die zeitlichen Verläufe (4, 8) an den Operator Station Client (14) zu übertragen, um die zeitlichen Verläufe (4, 8) der Messwerte einem Operator der technischen Anlage visuell in einem Verlaufsdiagramm darzubieten.

Das Leitsystem (12) ist dadurch gekennzeichnet, dass es dazu ausgebildet ist, für die Messwerte jeweils einen zeitlichen Verlauf (4, 8) eines dazugehörigen Alarmstatus (5) zu ermitteln und in dem Speicher (16, 26) zu hinterlegen,
wobei das Leitsystem (12) dazu ausgebildet ist, für einen bestimmten ersten Zeitbereich (6) eines ersten zeitlichen Verlaufs eines zu einem Messwert gehörigen ersten Alarmstatus (5) durch eine Ähnlichkeitsuntersuchung in dem Speicher (16, 26) einen zweiten Zeitbereich (6) zu identifizieren, in dem ein zweiter zeitlicher Verlauf eines zu den Messwerten oder zu weiteren Messwerten eines weiteren technischen Objektes gehörigen zweiten Alarmstatus (5) ähnlich zu dem ersten zeitlichen Verlauf ist.

## Beschreibung

Die Erfindung betrifft ein Leitsystem für eine technische Anlage, insbesondere Fertigungs- oder Prozessanlage. Außerdem betrifft die Erfindung ein Verfahren.

Für die Bedienung und Beobachtung verfahrenstechnischer Anlagen werden symbolische Anlagenbilder erstellt, die die verfah-renstechnischen Zusammenhänge - insbesondere zwischen einzelnen Prozessobjekten - abstrahiert darstellen. Anlagenbilder setzen sich dabei aus statischen Symbolen (z.B. Leitungen, Rechtecke, usw.), dynamisierten Symbolen (z.B. in Abhängigkeit von Prozesswerten Leitungen mit Farbumschlag, Rechtecke mit Füllständen, usw.), Blocksymbolen (zur dynamisierten Visualisierung verfahrenstechnischer Prozessobjekte), komplexen Controls (z.B. Trendanzeigen, Meldefolgeanzeigen, usw.) und Containern, um Inhalte aus unabhängigen und eigenständigen Quellen visualisieren zu können (z.B. Webcams, Anlagenbilder modularer Anlagenteile, oder Applikationen wie einen Regleroptimierer oder KPI-Berechnungen), zusammen.

Insbesondere die so genannten Trendanzeigen (Verlaufsdiagramme), welche den zeitlichen Verlauf eines Prozesswertes darstellen, nehmen in der Bedienung und Beobachtung eine zentrale Rolle ein. Da oftmals mehr Prozesswerte für einen darzustellenden Zeitbereich vorliegen, als eine grafische Zeichenfläche vorhanden ist (z.B. 1000 Messwerte für 100 Pixel einer Anzeige), werden Aggregationen angewandt. Dies bedeutet, dass mehrere Messwerte zu einem Messpunkt zusammengefasst werden (z.B. durch Mittelwertbildung für jeweils zehn Messwerte). Die Aggregation führt dabei zu einer "Glättung" bzw. einer Verfälschung des Trendverlaufs und bringt daher einige Nachteile mit sich.

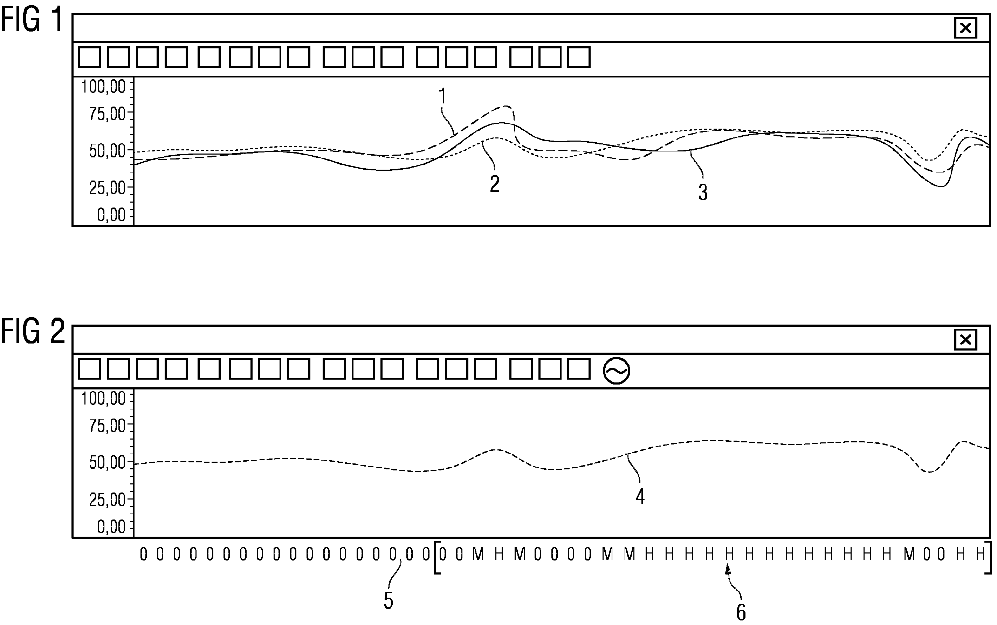

Auch wenn die verfahrenstechnischen Abläufe nahezu identisch sind, variieren dennoch die Prozesswerte und damit auch den daraus resultierenden Trendkurven (siehe FIG 1), so dass bei wiederkehrenden Abläufen (z.B. Erhitzen in einem Prozessschritt) die Trendkurven (z.B. Temperaturmessung) nie exakt deckungsgleich sind. Hierfür gibt es neben der Aggregation noch weitere Gründe:
- Verfahrenstechnische Abweichungen im Prozess und der Umgebung (z.B. schwankende Umgebungstemperatur)
- Abweichungen / Rauschen bei der Prozesswerterfassung (z.B. Temperatursensor)
- Eine ereignisorientierte Übertragung der Prozesswerte von der Automatisierung in den Operator Station Server findet nur statt, wenn hinreichend große Änderungen akkumuliert wurden - im Gegensatz zu zyklischen Übertragungen
- Komprimierung (verlustbehaftet) der Prozessdaten im Archiv (z.B. Swinging Door Algorithmus)
- Verzerrung bei der Darstellung der Trendkurve durch Aggregationseffekte, falls aufgrund der Größe des Zeitbereichs keine Rohdaten dargestellt werden können

FIG 1 zeigt eine exemplarische Darstellung von zeitlichen Verläufen (Trends) von Messwerten eines Prozessobjektes einer Prozessanlage, wobei die Kurven 1, 2, 3 jeweils die ermittelten Messwerte (auf 100% normiert) bei der Durchführung der gleichen verfahrenstechnischen Operation darstellen. Eine erste Kurve 1 von Messwerten (lange Striche) wurde in einem ersten Zeitbereich, eine zweite Kurve 2 von Messwerten (kurze Striche) in einem zweiten Zeitbereich und eine dritte Kurve von Messwerten 3 (durchgezogene Linie) ermittelt. Es ist zu erkennen, dass sich der genaue Verlauf der Kurven 1, 2, 3 quantitativ voneinander unterscheidet, obwohl sie qualitativ die gleiche Operation abbilden. Wenn ein Operator im Zuge der Bedienung und Beobachtung der Prozessanlage nach Kurven 2, 3 sucht, die ähnlich zu der ersten Kurve 1 sind, um hieraus Schlüsse ziehen zu können, kann diese Suche mit einer hohen Wahrscheinlichkeit aufgrund der quantitativen Unterschiede zwischen den Kurven 1, 2, 3 nicht erfolgreich sein. Der Operator könnte bei im Stand der Technik bekannten Leitsystemen somit leicht zu dem fehlerhaften Schluss gelangen, dass es gar keine vergleichbaren Kurvenverläufe für die Messwerte in der Vergangenenheit gegeben hat.

In der EP 3 819 727 A1 ist ein exemplarisches Leitsystem offenbart, welches Trendkurven bzw. Verlaufsdiagramme zu Messwerte von technischen Objekten darstellen kann.

Der Erfindung liegt die Aufgabe zugrunde, ein Leitsystem für eine technische Anlage anzugeben, welches die Effizienz und die Flexibilität einer Bedienung und Beobachtung der technischen Anlage erhöht.

Diese Aufgabe wird gelöst durch ein Leitsystem für eine technische Anlage, insbesondere Fertigungs- oder Prozessanlage, mit den Merkmalen des Anspruchs 1. Außerdem wird die Aufgabe gelöst durch ein Verfahren gemäß Anspruch 10. Vorteilhafte Weiterbildungen ergeben sich aus den abhängigen Ansprüchen.

Ein erfindungsgemäßes Leitsystem für eine technische Anlage, insbesondere Fertigungsanlage oder Prozessanlage, welches wenigstens einen Operator Station Server und einen Operator Station Client aufweist, wobei der Operator Station Server dazu ausgebildet ist, Messwerte von einem mit dem Leitsystem verbundenen technischen Objekt zu empfangen, zeitliche Verläufe der Messwertes zu erzeugen, die zeitlichen Verläufe der Messwerte in einem Speicher zu hinterlegen und die zeitlichen Verläufe an den Operator Station Client zu übertragen, um die zeitlichen Verläufe der Messwerte einem Operator der technischen Anlage visuell in einem Verlaufsdiagramm darzubieten, ist dadurch gekennzeichnet, dass es dazu ausgebildet ist, für die Messwerte jeweils einen zeitlichen Verlauf eines dazugehörigen Alarmstatus zu ermitteln und in dem Speicher zu hinterlegen, wobei das Leitsystem dazu ausgebildet ist, für einen bestimmten ersten Zeitbereich eines ersten zeitlichen Verlaufs eines zu einem Messwert gehörigen ersten Alarmstatus durch eine Ähnlichkeitsuntersuchung in dem Speicher einen zweiten Zeitbereich zu identifizieren, in dem ein zweiter zeitlicher Verlauf eines zu den Messwerten oder zu weiteren Messwerten eines weiteren technischen Objektes gehörigen zweiten Alarmstatus ähnlich zu dem ersten zeitlichen Verlauf ist.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Leitsystem wird im vorliegenden Kontext ein computergestütztes, technisches System verstanden, das Funktionalitäten zum Darstellen, Bedienen und Leiten der technischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Da-tenspeicherung und -verarbeitung umfassen.,

Das Leitsystem weist ein an sich bekanntes Alarmsystem auf, welches zur Erzeugung von Alarmmeldungen ausgebildet ist, die beim Vorliegen vorgebbarer Kriterien wie einer Über- oder Unterschreitung eines Schwellwertes erzeugt und einem Operator des Leitsystems dargeboten wird, insbesondere visuell und/oder akustisch. Das Leitsystem ist zudem dazu ausgebildet, für einen zu einem technischen Objekt wie einem Prozessobjekt gehörigen Alarm einen Alarmstatus zu ermitteln. Ein solcher Alarmstatus kann beispielweise die Werte "Kein Alarm", "Geringer Alarm", "Mittlerer Alarm" oder "Hoher Alarm" aufweisen. Mit anderen Worten drückt der Alarmstatus eine Kritikalität eines Alarms an, die von "nicht kritisch" bis zu "hoch kritisch" reichen kann.

Es wird dabei davon ausgegangen, dass der Operator Station Server wenigstens eine Software-Komponente umfasst, die für eine Zeitdauer eines in der Software-Komponente auftretenden Fehlers einen Alarm mit einem bestimmten Schweregrad erzeugen kann. Eine solche Software-Komponente kann beispielsweise ein Prozessabbilddienst, ein Visualisierungsdienst, ein Archivdienst oder ein Kommunikationsdienst sein, die auf dem Operator Station Server implementiert sind und verschiedene Funktionalitäten im Rahmen der Bedienung und Beobachtung der technischen Anlage bereitstellen.

Ein Fehler wird vorliegend allgemein als eine Abweichung eines Ist-Zustandes der Software-Komponente von einem Soll-Zustand der Software-Komponente verstanden.

Der von dem Alarmsystem erzeugte Alarm wird über eine bestimmte Zeitdauer hinweg ausgegeben und weist in der Regel einen bestimmten Schweregrad auf. Dadurch informiert der Alarm über das Vorliegen des Fehlers, über die Zeitdauer des Auftretens des Fehlers und über den Schweregrad des Fehlers.

Die Ähnlichkeitsuntersuchung, die der Operator Station Server durchführt, erfolgt bevorzugt durch Vergleichen der Werte des ersten zeitlichen Verlaufs des Alarmstatus in dem bestimmten ersten Zeitbereich mit jeweiligen Werten des zweiten zeitlichen Verlauf des Alarmstatus in dem zu bestimmenden zweiten Zeitbereich. Der Operator Station Server vergleicht demnach zeitliche Verläufe des Alarmstatus miteinander. Wenn der Alarmstatus in dem bestimmten Referenz-Zeitbereich beispielsweise die Wertefolge "Geringer Alarm"-"Geringer Alarm"-"Kein Alarm"-"Hoher Alarm"-Hoher Alarm" aufweist, dann sucht der Operator Station Server in dem Speicher nach identischen Wertefolgen.

Das erfindungsgemäße Leitsystem ist im Gegensatz zum Stand der Technik dazu ausgebildet, zusätzlich zu dem zeitlichen Verlauf der Messwerte auch einen zeitlichen Verlauf des zu den Messwerten gehörigen Alarmstatus zu ermitteln und in einem Speicher zu hinterlegen. Dabei muss nicht zu jedem einzelnen Messwert der Alarmstatus ermittelt werden. Es kann ausreichend sein, wenn beispielsweise nur für jeden zehnten Messwert der Alarmstatus ermittelt wird, um ein unnötig hohes Datenaufkommen zu vermeiden.

Der Speicher kann in einer cloudbasierten Umgebung realisiert sein. Es ist aber auch möglich, dass der Speicher Teil des Operator Station Servers ist. Bevorzugt ist der Speicher auf einem von dem Operator Station Server separaten Archivserver realisiert. Dieser Archivserver ist dabei speziell dazu ausgelegt, Daten aus der technischen Anlage und dem Leitsystem zu speichern bzw. zu archivieren.

Das erfindungsgemäße Leitsystem kann besonders effizient einen zeitlichen Verlauf der Messwerte identifizieren, welcher eine große Ähnlichkeit zu einem Referenzverlauf der Messwerte aufweist. Hierfür nutzt das Leitsystem die Erkenntnis, dass der Alarmstatus im Gegensatz zu den Messwerten wie Prozessmesswerten nicht durch Aggregationseffekte, verlustbehafteten Komprimierungen usw. verfälscht werden kann. Hierdurch lässt sich die Ähnlichkeitssuche mit einer deutlich höheren Genauigkeit vornehmen und ähnliche zeitliche Verläufe lassen sich zuverlässiger ermitteln. Die äquivalenten/ähnlichen Kurvenabschnitte können über das Alarmstatusmuster des technischen Objektes effizienter und variationstoleranter als bei bekannten Leitsystemen ermittelt werden.

Im Rahmen einer bevorzugten Weiterbildung der Erfindung ist der Operator Station Server des Leitsystems dazu ausgebildet, den ersten zeitlichen Verlauf der zu dem ersten Alarmstatus gehörigen Messwerte und den zweiten zeitlichen Verlauf der zu dem zweiten Alarmstatus gehörigen Messwertes an den Operator Station Client zu übertragen, um diese dem Operator der technischen Anlage visuell in einem gemeinsamen Verlaufsdiagramm darzubieten. Mit anderen Worten stellt das Leitsystem dem Operator die beiden Verlaufskurven visuell in einem gemeinsamen Diagramm gegenüber, so dass der Operator unmittelbar ermitteln kann, ob die ermittelte zweite Kurve zu der ersten Kurve auch tatsächlich passt. Darüber hinaus kann der Operator aus dem Verlauf der Kurven effizient Rückschlüsse für die Bedienung und Beobachtung der technischen Anlage ziehen.

Besonders bevorzugt ist der Operator Station Server zusätzlich dazu ausgebildet, den ersten zeitlichen Verlauf des zu den Messwerten gehörigen ersten Alarmstatus und den zweiten zeitlichen Verlauf des zu den Messwerten oder zu den weiteren Messwerten des weiteren technischen Objektes gehörigen zweiten Alarmstatus an den Operator Station Client zu übertragen, um diese dem Operator der technischen Anlage visuell in dem gemeinsamen Verlaufsdiagramm darzubieten. Mit anderen Worten gibt der Operator Station Client bevorzugt zusätzlich zu den zeitlichen Verläufen der Messwerte auch die zeitlichen Verläufe der dazugehörigen Alarmstatus an. Hierdurch erkennt der Operator sofort, auf welcher Basis die Evaluierung der Ähnlichkeit der beiden zeitlichen Verläufe der Messwerte erfolgt ist, und kann etwaige Unregelmäßigkeiten einfach identifizieren.

Die Ermittlung von ähnlichen zeitlichen Verläufen ist nicht auf einen einzigen zeitlichen Verlauf beschränkt. Vielmehr kann der Operator Station Server dazu ausgebildet sein, für den bestimmten ersten Zeitbereich des ersten zeitlichen Verlaufs des zu dem Messwert gehörigen ersten Alarmstatus durch eine Ähnlichkeitsuntersuchung in dem Speicher einen dritten Zeitbereich zu identifizieren, in dem ein dritter zeitlicher Verlauf des zu dem Messwert oder zu einem weiteren Messwert gehörigen zweiten Alarmstatus ähnlich zu dem ersten zeitlichen Verlaufs ist.

Ein Operator der technischen Anlage kann dem Leitsystem eine Vorgabe machen, dahingehend, welcher Zeitspanne die Ähnlichkeitsuntersuchung in dem Speicher vorgenommen werden soll. Wenn der Operator beispielsweise einen ähnlichen Verlauf vor einer Woche oder einem Monat vermutet, kann er die Ähnlichkeitssuche hierauf beschränken, um die Suche effizienter, zielgerichteter und ressourcenschonender zu gestalten.

Die Ähnlichkeitsuntersuchung kann auch für einen zweiten oder weitere zeitliche Verläufe von Messwerten durchgeführt werden. Der Operator Station Server kann hierfür dazu ausgebildet sein, für einen bestimmten ersten Zeitbereich eines dritten zeitlichen Verlaufs eines zu einem Messwert gehörigen dritten Alarmstatus durch eine Ähnlichkeitsuntersuchung in dem Speicher einen zweiten Zeitbereich zu identifizieren, in dem ein vierter zeitlicher Verlauf des zu dem Messwert oder zu einem weiteren Messwert gehörigen vierten Alarmstatus ähnlich zu dem dritten zeitlichen Verlauf ist.

Die zuvor formulierte Aufgabe wird zudem gelöst durch ein Verfahren, umfassend die folgenden Schritte:
a) Durch einen Operator Station Server eines Leitsystems für eine technische Anlage, insbesondere Fertigungs- oder Prozessanlage, Empfangen von Messwerten von einem mit dem Leitsystem verbundenen technischen Objekt,
b) Durch den Operator Station Server eines Leitsystems für eine technische Anlage, insbesondere Fertigungs- oder Prozessanlage, Erzeugen von zeitlichen Verläufen der Messwerte und Hinterlegen der zeitlichen Verläufe der Messwerte in einem Speicher,
c) Für die Messwerte, jeweiliges Ermitteln eines zeitlichen Verlaufs eines dazugehörigen Alarmstatus und Hinterlegen des zeitlichen Verlaufs des Alarmstatus in dem Speicher durch den Operator Station Server,
d) Übertragen eines ersten zeitlichen Verlaufs von Messwerten der zuvor erzeugten zeitlichen Verläufe der Messwerte von dem Operator Station Server an einen Operator Station Client des Leitsystems und visuelle Darbietung des ersten zeitlichen Verlaufs an einen Operator der technischen Anlage durch den Operator Station Client,
e) Für einen bestimmten ersten Zeitbereich des ersten zeitlichen Verlaufs des zu den Messwerten gehörigen ersten Alarmstatus, Identifizieren, durch eine Ähnlichkeitsuntersuchung in dem Speicher durch den Operator Station Server, eines zweiten Zeitbereichs, in dem ein zweiter zeitlicher Verlauf eines zu den Messwerten des mit technischen Objektes oder zu weiteren Messwerten eines weiteren technischen Objektes gehörigen zweiten Alarmstatus ähnlich zu dem ersten zeitlichen Verlauf ist.

Bevorzugt bietet der Operator Station Server den ersten zeitlichen Verlauf der zu dem ersten Alarmstatus gehörigen Messwerte und den zweiten zeitlichen Verlauf der zu dem zweiten Alarmstatus gehörigen Messwertes an den Operator Station Client überträgt und bei dem der Operator Station Client diese dem Operator der technischen Anlage visuell in einem gemeinsamen Verlaufsdiagramm dar.

Ganz besonders bevorzugt bietet der Operator Station Server den ersten zeitlichen Verlauf des zu den Messwerten gehörigen ersten Alarmstatus und den zweiten zeitlichen Verlauf des zu den Messwerten oder zu den weiteren Messwerten des weiteren technischen Objektes gehörigen zweiten Alarmstatus an den Operator Station Client überträgt und der Operator Station Client diese dem Operator der technischen Anlage visuell in dem gemeinsamen Verlaufsdiagramm dar.

Der Operator Station Server kann die Ähnlichkeitsuntersuchung durchführen, indem er die Werte des ersten zeitlichen Verlaufs des Alarmstatus in dem bestimmten ersten Zeitbereich mit jeweiligen Werten des zweiten zeitlichen Verlaufs des Alarmstatus in dem zu bestimmenden zweiten Zeitbereich vergleicht.

Bevorzugt kann der Operator vorgeben, in welcher Zeitspanne die Ähnlichkeitsuntersuchung in dem Speicher vorgenommen werden soll.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
FIG 2 einen ersten zeitlichen Verlauf von Messwerten;
FIG 3 einen zweiten zeitlichen Verlauf von Messwerten;
FIG 4 eine Überlagerung des ersten und des zweiten zeitlichen Verlaufs der Messwerte;
FIG 5 eine visuelle Darstellung eines Anlagenbildes mit der Überlagerung gemäß FIG 4; und
FIG 6 ein Leitsystem in einer schematischen Darstellung.

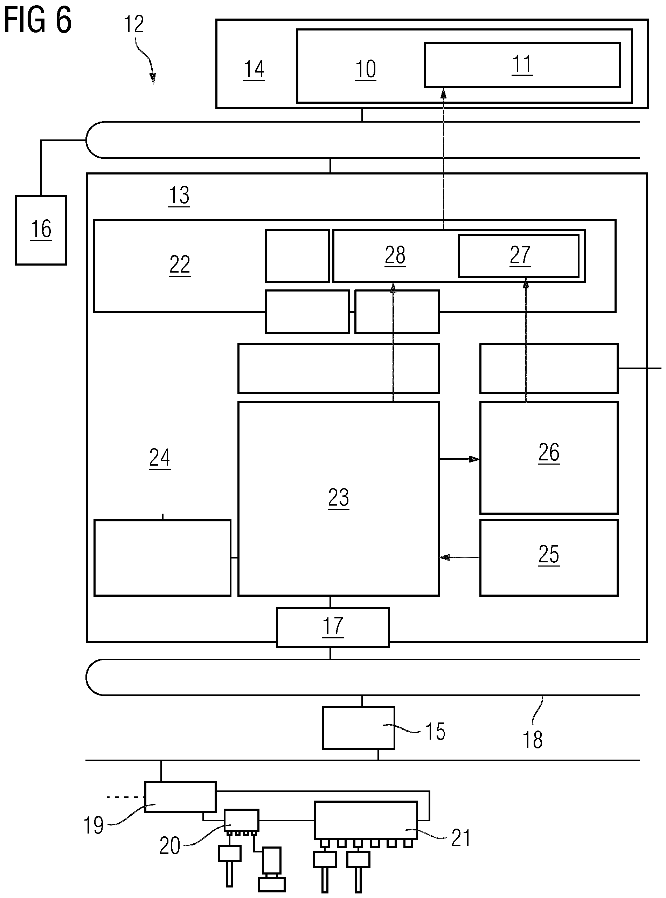

FIG 2 zeigt eine visuelle Darstellung eines ersten zeitlichen Verlaufs 4 (gestrichelte Linie) eines Prozessmesswertes, welcher durch ein Messgerät in einer als Prozessanlage ausgebildeten technischen Anlage ermittelt und in einem Speicher eines Archivservers eines Leitsystems für die Prozessanlage hinterlegt wurde. Bezüglich der Details zum Aufbau des Leitsystems sei auf die Beschreibung von FIG 6 verwiesen.

Unterhalb der Darstellung des zeitlichen Verlaufs 4 der Prozessmesswerte ist der zu den Prozessmeswerten ermittelte und ebenfalls aus dem Speicher abgerufene Alarmstatus 5 dargestellt. Der Alarmstatus 5 kann tatsächlich unterhalb des zeitlichen Verlaufs 4 in einer grafischen Darbietung durch einen Operator Station Client des Leitsystems dargestellt sein. FIG 2 kann aber auch nur als eine erläuternde Darbietung des Alarmstatus 5 angesehen werden - d.h. der Alarmstatus 5 wird nicht durch den Operator Station Client dargestellt.

Der Alarmstatus 5 wird vorliegend für jeweils zehn Prozessmesswerte durch einen Operator Station Server des Leitsystems ermittelt und weist die Werte "0" (kein Alarm), "L" (Low Alarm), "M" (Medium Alarm") und "H" (High Alarm") auf. FIG 2 zeigt einen zeitlichen Verlauf des Alarmstatus 5, wobei in dem Verlauf die Sequenz 00MHM0000MMHHHHHHHHHHHHHM00HH zu erkennen ist (durch eckige Klammern gekennzeichnet). Der zu der Sequenz gehörige erste Zeitbereich 6 wird als Referenz für eine Ähnlichkeitssuche durch einen Operator der Prozessanlage festgelegt.

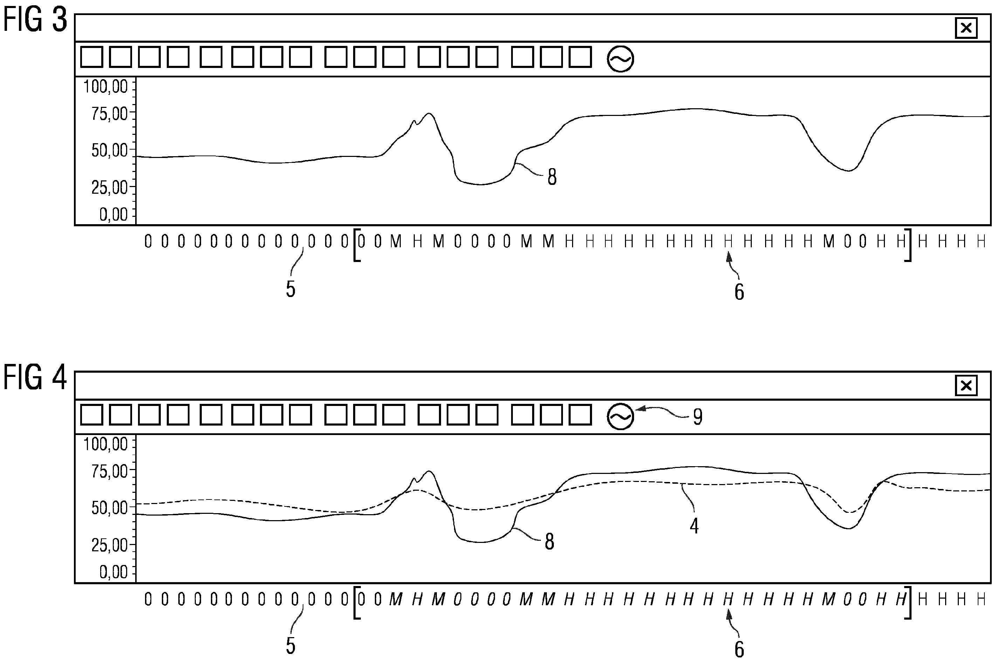

Auf eine Anforderung durch den Operator hin identifiziert der Operator Station Server einen zweiten Zeitbereich 7, in welchem ein zeitlicher Verlauf des Alarmstatus 5 ebenfalls die Sequenz 00MHM0000MMHHHHHHHHHHHHHM00HH aufweist. Der zu dem zeitlichen Verlauf des Alarmstatus 5 gehörige zweite zeitliche Verlauf 8 der Prozessmesswerte ist in FIG 3 dargestellt. Dieser zweite zeitliche Verlauf 8 kann beispielsweise eine Woche gemessen und gespeichert worden sein. Es ist aber auch möglich, dass die Prozessmesswerte des zweiten zeitlichen Verlaufs 8 zeitlich nachfolgend zu denen des ersten zeitlichen Verlaufs 4 sind (sie wurden also später ermittelt). Es ist anzumerken, dass es sich hier bei den Prozessmesswerten um Messwerte eines einzigen Prozessobjektes handelt. Die Suche kann sich aber auch auf andere Prozessobjekte beziehen.

FIG 4 zeigt eine Gegenüberstellung der beiden zeitlichen Verläufe 4, 8, die der Operator durch Anwählen einer Schaltfläche 9 bewirkt hat. Obgleich die Kurven 4, 8 nicht deckungsgleich sind, sind sie qualitativ ähnlich. Diese Ähnlichkeit spiegelt sich in der - für den betrachteten Zeitbereich 6 - Deckungsgleichheit der Alarmstatussequenz wieder. Der Zeitbereich 6 mit der Deckungsgleichheit kann zur besseren Verständlichkeit für den Operator farblich hervorgehoben werden. Durch ein erneutes Betätigen der Schaltfläche 9 kann der Operator den Operator Station Server anweisen, in dem Speicher des Archivservers nach weiteren Übereinstimmungen zu suchen. Weiterhin ist es möglich, den Zeitbereich, in dem nach einer Übereinstimmung gesucht werden soll, vorzugeben (z.B. vor einer Woche oder vor einem Monat). Dieses Verfahren eignet sich nicht nur für einen einzigen zeitlichen Verlauf 4 eines Prozessmesswertes, sondern auch für mehrere zeitliche Verläufe für mehrere Prozessmesswerte. So kann z.B. für drei parallel dargestellte Kurven jeweils eine Äquivalenzsuche angestoßen werden, mit der parallel nach äquivalenten Alarmstatussequenzen gesucht wird.

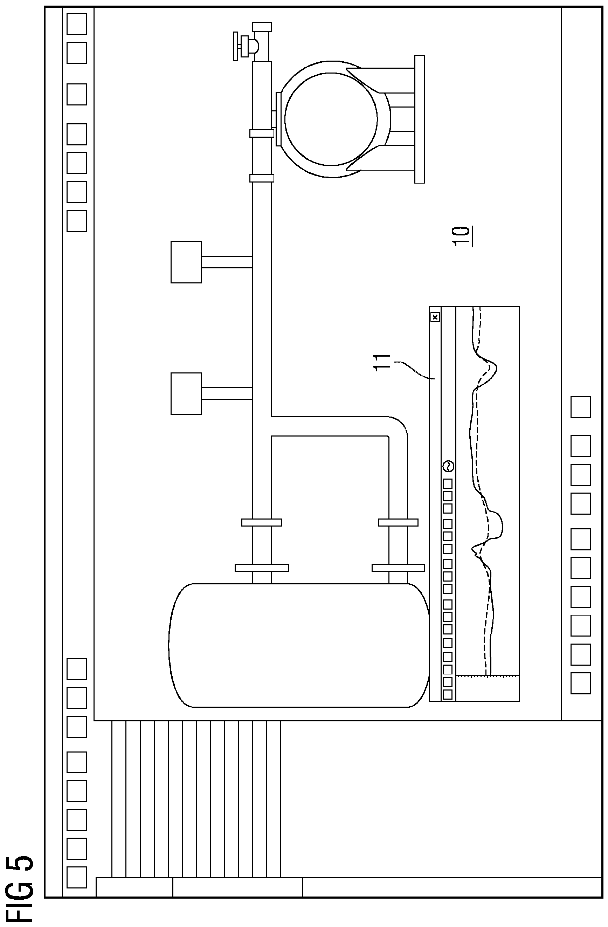

FIG 5 zeigt eine visuelle Darbietung eines Anlagenbildes 10 durch den Operator Station Client des Leitsystems. In dem Anlagenbild 10 ist die in FIG 5 erläuterte visuelle Darbietung 11 enthalten. Das erfindungsgemäße Verfahren ermöglicht es, äquivalente Kurvenverläufe im Umfeld von verfahrenstechnischen Ereignissen mit deutlich reduziertem Aufwand zu identifzieren. Das Verfahren ist insbesondere gegenüber Variationen in den Kurvenverläufen tolerant, da sich die Äquivalenzsuche auf unverfälschte verfahrenstechnische Aspekte stützt, nämlich den Alarmstatus 5 der Prozessalarme der Prozessobjekte.

In FIG 6 ist ein erfindungsgemäßes Leitsystem 12 für eine Prozessanlage schematisch dargestellt. Das Leitsystem 12 weist einen Operator Station Server 13, einen Operator Station Client 14, ein Archivserver 16 und ein Automatisierungsgerät 15 auf. Der Operator Station Server 13 weist eine Geräteschnittstelle 17 auf, die mit einem Anlagenbus 18 verbunden ist. Über diese Geräteschnittstelle 17 ist der Operator Station Server 13 mit dem Automatisierungsgerät 15 sowie mit weiteren Komponenten der Prozessanlage wie Peripheriegeräten 19, 20, 21 verbunden und kann mit diesen kommunizieren. Der Anlagenbus 18 kann, ohne sich darauf zu beschränken, beispielsweise als Industrial Ethernet ausgebildet sein.

Auf dem Operator Station Server 13 sind (unter anderem) ein Visualisierungsdienst ("Visualization Services") 22, ein Prozessabbild ("Process Image") 23 und ein Konfigurationsspeicher 24 ("Config") implementiert. Der in dem Operator Station Server 13 integrierte Visualisierungsdienst 22 initiiert eine Übertragung von Visualisierungsinformationen an den Operator Station Client 14. Der Operator Station Client 14 ist dazu ausgebildet, eine Visualisierung, d.h. eine grafische Darbietung, insbesondere von Anlagenbildern 10 ("Plant Display"), Messwerteverläufen, Bedienelementen und vergleichbaren Elementen, zum Bedienen und Beobachten der Prozessanlage darzustellen.

In dem Prozessabbild 23 des Operator Station Servers 13 ist eine Momentaufnahme der (Signal-)Zustände von mit dem Operator Station Server 13 verbundenen Geräten 19, 20, 21 und/oder Applikationen hinterlegt. Diese werden im vorliegenden Ausführungsbeispiel von dem Automatisierungsgerät 15 an den Operator Station Server 13 übertragen.

Auf dem Operator Station Server 13 ist weiterhin ein Alarmdienst 25 ("Alarm Manager") implementiert, welcher in Verbindung mit dem Automatisierungsgerät 15 ein Alarmsystem bildet, welches zur Überwachung der Prozessobjekte hinsichtlich vorgebbarer Kriterien und zur Erzeugung von Alarmmeldungen bezüglich der überwachten Prozessobjekte mit einem bestimmten Alarmstatus ausgebildet ist.

Nach Fertigstellung einer Automatisierung für die Prozessanlage durch einen Projekteur werden die Automatisierungsdaten durch einen Kompilierungsdienst ("Compile & Load") eines (nicht dargestellten) Engineering Station Servers in ein für das Automatisierungsgerät 15 und den Operator Station Server 13 verständliches Datenformat gebracht und an die beiden Geräte 13, 15 übertragen. Der für die Bedienung und Beobachtung der Prozessanlage vorgesehene Teil der Automatisierungsdaten wird in dem Konfigurationsspeicher 24 des Operator Station Servers 13 hinterlegt. Der das Automatisierungsgerät 15 betreffende Teil wird entsprechend in einem Datenspeicher des Automatisierungsgerätes 15 hinterlegt.

Wie anhand der Figuren 2 bis 5 beschrieben, ermittelt der Operator Station Server 13 den zu einem Prozessmesswert gehörigen Alarmstatus. Damit eine durch den Operator angestoßene Äquivalenzbestimmung auf Grundlage von historischen Alarmstatussequenzen erfolgen kann, wird neben den Prozesswerten und Alarmen auch der Alarmstatus in dem Archivserver 16 (und/oder in einem lokalen Archiv 26 des Operator Station Servers 13) archiviert. Ein Ähnlichkeitssuchdienst 27 eines Anzeigedienstes 28 des Visualisierungsdienstes 13 bestimmt wie beschrieben auf Grundlage des aufgeschlagenen Zeitbereichs eines zeitlichen Verlaufs eines Prozessmesswertes die dazugehörige Alarmstatussequenz und überprüft, ob in der Historie eine vergleichbare Alarmstatussequenz zu finden ist. Um entsprechende Schaltflächen 9 in der visuellen Darbietung 10 anbieten zu können, wird neben einem Anzeigedienst 28 auch die grafische Anzeige (View) der visuellen Darbietung des zeitlichen Verlaufs (vgl. FIG 2-4) erweitert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1a: Alarmunterdrückungsgruppe 1
- 1b: Alarmunterdrückungsgruppe 2
- 2: Anlagenzustand
- 3: Bedingung
- 4: Alarm
- 5: Anlagenbild
- 6: Projektierungswerkzeug
- 7: Erste visuelle Darstellung
- 8: Zweite visuelle Darstellung
- 9: Computerimplementiertes Werkzeug zum Bedienen und Beobachten
- 10: Anwenderselektion
- 11: Leitsystem
- 12: Operator Station Server
- 13: Operator Station Client
- 14: Engineerign Station Server
- 15: Automatisierungsgerät
- 16: Geräteschnittstelle
- 17: Anlagenbus
- 18: Peripheriegerät
- 19: Peripheriegerät
- 20: Peripheriegerät
- 21: Visualisierungsdienst
- 22: Prozessabbild
- 23: Konfigurationsspeicher
- 24: Grafische Darbietung
- 25: Prozessobjekt
- 26: Kompilierungsdienst
- 27: Anlagenbildeditor
- 28: Unterdrückungsdienst
- 29: Anlagenbildhierarchiedienst
- 30: Anlagenbilddienst
- 31: Alarmdienst

## Patentansprüche

1. Leitsystem (12) für eine technische Anlage, insbesondere Fertigungsanlage oder Prozessanlage, welches wenigstens einen Operator Station Server (13) und einen Operator Station Client (14) aufweist, wobei der Operator Station Server (13) dazu ausgebildet ist, Messwerte von einem mit dem Leitsystem (12) verbundenen technischen Objekt zu empfangen, zeitliche Verläufe (4, 8) der Messwertes zu erzeugen, die zeitlichen Verläufe (4, 8) der Messwerte in einem Speicher (16, 26) zu hinterlegen und die zeitlichen Verläufe (4, 8) an den Operator Station Client (14) zu übertragen, um die zeitlichen Verläufe (4, 8) der Messwerte einem Operator der technischen Anlage visuell in einem Verlaufsdiagramm darzubieten,
**dadurch gekennzeichnet, dass**
das Leitsystem (12) dazu ausgebildet ist, für die Messwerte jeweils einen zeitlichen Verlauf (4, 8) eines dazugehörigen Alarmstatus (5) zu ermitteln und in dem Speicher (16, 26) zu hinterlegen,
wobei das Leitsystem (12) dazu ausgebildet ist, für einen bestimmten ersten Zeitbereich (6) eines ersten zeitlichen Verlaufs eines zu einem Messwert gehörigen ersten Alarmstatus (5) durch eine Ähnlichkeitsuntersuchung in dem Speicher (16, 26) einen zweiten Zeitbereich (6) zu identifizieren, in dem ein zweiter zeitlicher Verlauf eines zu den Messwerten oder zu weiteren Messwerten eines weiteren technischen Objektes gehörigen zweiten Alarmstatus (5) ähnlich zu dem ersten zeitlichen Verlauf ist.

2. Leitsystem (12) nach Anspruch 1, bei dem der Operator Station Server (13) dazu ausgebildet ist, den ersten zeitlichen Verlauf (4) der zu dem ersten Alarmstatus (5) gehörigen Messwerte und den zweiten zeitlichen Verlauf (8) der zu dem zweiten Alarmstatus (5) gehörigen Messwertes an den Operator Station Client (14) zu übertragen, um diese dem Operator der technischen Anlage visuell in einem gemeinsamen Verlaufsdiagramm darzubieten.

3. Leitsystem (12) nach Anspruch 2, bei dem der Operator Station Server (13) dazu ausgebildet ist, den ersten zeitlichen Verlauf (4) des zu den Messwerten gehörigen ersten Alarmstatus (5) und den zweiten zeitlichen Verlauf (8) des zu den Messwerten oder zu den weiteren Messwerten des weiteren technischen Objektes gehörigen zweiten Alarmstatus (5) an den Operator Station Client (14) zu übertragen, um diese dem Operator der technischen Anlage visuell in dem gemeinsamen Verlaufsdiagramm darzubieten.

4. Leitsystem (12) nach einem der vorangegangenen Ansprüche, bei dem der Alarmstatus (5) die Werte "Kein Alarm", "Geringer Alarm", "Mittlerer Alarm" oder "Hoher Alarm" aufweist.

5. Leitsystem (12) nach einem der vorangegangenen Ansprüche, bei dem die Ähnlichkeitsuntersuchung durch den Operator Station Server (13) durch Vergleichen der Werte des ersten zeitlichen Verlaufs (4) des Alarmstatus (5) in dem bestimmten ersten Zeitbereich (6) mit jeweiligen Werten des zweiten zeitlichen Verlauf (8) des Alarmstatus (5) in dem zu bestimmenden zweiten Zeitbereich (6) erfolgt.

6. Leitsystem (12) nach einem der vorangegangenen Ansprüche, bei dem der Operator Station Server (13) dazu ausgebildet ist, für den bestimmten ersten Zeitbereich (6) des ersten zeitlichen Verlaufs (4) des zu dem Messwert gehörigen ersten Alarmstatus (5) durch eine Ähnlichkeitsuntersuchung in dem Speicher (16, 26) einen dritten Zeitbereich zu identifizieren, in dem ein dritter zeitlicher Verlauf des zu dem Messwert oder zu einem weiteren Messwert gehörigen zweiten Alarmstatus (5) ähnlich zu dem ersten zeitlichen Verlaufs (4) ist.

7. Leitsystem (12) nach einem der vorangegangenen Ansprüche, das dazu ausgebildet ist, eine Vorgabe durch einen Operator der technischen Anlage entgegenzunehmen, dahingehend, in welcher Zeitspanne die Ähnlichkeitsuntersuchung in dem Speicher (16, 26) vorgenommen werden soll.

8. Leitsystem (12) nach einem der vorangegangenen Ansprüche, bei dem der Operator Station Server (13) dazu ausgebildet ist, für einen bestimmten ersten Zeitbereich eines dritten zeitlichen Verlaufs eines zu einem Messwert gehörigen dritten Alarmstatus durch eine Ähnlichkeitsuntersuchung in dem Speicher einen zweiten Zeitbereich zu identifizieren, in dem ein vierter zeitlicher Verlauf des zu dem Messwert oder zu einem weiteren Messwert gehörigen vierten Alarmstatus ähnlich zu dem dritten zeitlichen Verlauf ist.

9. Leitsystem (12) nach einem der vorangegangenen Ansprüche, bei dem der Speicher (16, 26) auf einem von dem Operator Station Server (13) separaten Archivserver (16) realisiert ist.

10. Verfahren, umfassend die folgenden Schritte:
a) Durch einen Operator Station Server (13) eines Leitsystems (12) für eine technische Anlage, insbesondere Fertigungs- oder Prozessanlage, Empfangen von Messwerten von einem mit dem Leitsystem (12) verbundenen technischen Objekt,
b) Durch den Operator Station Server (13) des Leitsystems (12) für die technische Anlage, insbesondere Fertigungs- oder Prozessanlage, Erzeugen von zeitlichen Verläufen (4, 8) der Messwerte und Hinterlegen der zeitlichen Verläufe (4 ,8) der Messwerte in einem Speicher (16, 26),
c) Für die Messwerte, jeweiliges Ermitteln eines zeitlichen Verlaufs eines dazugehörigen Alarmstatus (5) und Hinterlegen des zeitlichen Verlaufs des Alarmstatus (5) in dem Speicher (16, 26) durch den Operator Station Server (13),
d) Übertragen eines ersten zeitlichen Verlaufs (4) von Messwerten der zuvor erzeugten zeitlichen Verläufe (4, 8) der Messwerte von dem Operator Station Server (13) an einen Operator Station Client (14) des Leitsystems (12) und visuelle Darbietung des ersten zeitlichen Verlaufs (4) an einen Operator der technischen Anlage durch den Operator Station Client (14),
e) Für einen bestimmten ersten Zeitbereich (6) des ersten zeitlichen Verlaufs des zu den Messwerten gehörigen ersten Alarmstatus (5), Identifizieren, durch eine Ähnlichkeitsuntersuchung in dem Speicher (16, 26) durch den Operator Station Server (13), eines zweiten Zeitbereichs (6), in dem ein zweiter zeitlicher Verlauf eines zu den Messwerten des mit technischen Objektes oder zu weiteren Messwerten eines weiteren technischen Objektes gehörigen zweiten Alarmstatus (5) ähnlich zu dem ersten zeitlichen Verlauf ist.

11. Verfahren nach Anspruch 10, bei dem der Operator Station Server (13) den ersten zeitlichen Verlauf (4) der zu dem ersten Alarmstatus (5) gehörigen Messwerte und den zweiten zeitlichen Verlauf (8) der zu dem zweiten Alarmstatus (5) gehörigen Messwerte an den Operator Station Client (14) überträgt und bei dem der Operator Station Client (14) diese dem Operator der technischen Anlage visuell in einem gemeinsamen Verlaufsdiagramm darbietet.

12. Verfahren nach Anspruch 10 oder 11, bei dem der Operator Station Server (13) den ersten zeitlichen Verlauf des zu den Messwerten gehörigen ersten Alarmstatus (5) und den zweiten zeitlichen Verlauf des zu den Messwerten oder zu den weiteren Messwerten des weiteren technischen Objektes gehörigen zweiten Alarmstatus (5) an den Operator Station Client (14) überträgt und der Operator Station Client (14) diese dem Operator der technischen Anlage visuell in dem gemeinsamen Verlaufsdiagramm darbietet.

13. Verfahren nach einem der Ansprüche 10 bis 12, bei dem der Operator Station Server (13) die Ähnlichkeitsuntersuchung durchführt, indem er die Werte des ersten zeitlichen Verlaufs des Alarmstatus (5) in dem bestimmten ersten Zeitbereich (6) mit jeweiligen Werten des zweiten zeitlichen Verlaufs des Alarmstatus (5) in dem zu bestimmenden zweiten Zeitbereich vergleicht.

14. Verfahren nach einem der Ansprüche 10 bis 13, bei dem der Operator vorgibt, in welcher Zeitspanne die Ähnlichkeitsuntersuchung in dem Speicher (16, 26) vorgenommen werden soll.
